# EUROPÄISCHE PATENTSCHRIFT

(11) **EP 3 165 838 B1**
(45) Veröffentlichungstag und Bekanntmachung des Hinweises auf die Patenterteilung: **02.09.2020**
(21) Anmeldenummer: 16197944.8
(22) Anmeldetag: 09.11.2016
(51) Int. Cl.: F24D 5/12, F28D 20/00, F28D 21/00, F24F 5/00, F24F 12/00, F24D 17/00, F28D 9/00, F24D 17/02

(54) **VORRICHTUNG ZUM BELÜFTEN VON RÄUMEN**
DEVICE FOR VENTILATING ROOMS
DISPOSITIF D'AÉRATION DE LOCAUX

(30) Priorität: 09.11.2015 AT 3312015 U
(43) Veröffentlichungstag der Anmeldung: 10.05.2017
(73) Patentinhaber: J. Pichler Gesellschaft m.b.H., 9020 Klagenfurt (AT)
(72) Erfinder: HALLEGGER, Martin, 9072 Ludmannsdorf (AT)
(74) Vertreter: Beer & Partner Patentanwälte KG

(56) Entgegenhaltungen:
- EP-A1- 2 629 023
- EP-A2- 1 870 643
- DE-T5-112013 006 239
- FR-A1- 2 979 418

## Beschreibung

Die Erfindung betrifft eine Vorrichtung zum Belüften von Räumen mit einem Wärmepumpenkreis für das Erwärmen von Wasser und einem weiteren Wärmepumpenkreis für das Erwärmen oder Kühlen von Zuluft.

Eine gattungsgemäße Vorrichtung ist aus EP 2 629 023 A1 bekannt. Die darin beschriebene Lüftungseinrichtung für Gebäude weist Strömungswege für Außenluft, Fortluft, Abluft und Zuluft auf, die über einen gemeinsamen Gegenstromwärmetauscher geführt sind, wobei zwischen den Strömen von Außenluft und Zuluft und den Strömen von Abluft und Fortluft Wärme übertragen wird und wobei die Lüftungseinrichtung zwei Wärmepumpenkreise aufweist, von welchen einer zum Erwärmen oder Kühlen von Luft und eine zum Erwärmen von Wasser geeignet ist.

Weitere Lüftungseinrichtungen für Gebäude sind aus der FR 2 979 418 A1 und aus der EP 1 870 643 A2 bekannt.

Der Erfindung liegt die Aufgabe zugrunde, eine Vorrichtung der eingangs genannten Gattung zur Verfügung zu stellen, die nicht nur ein kontrolliertes Belüften von Räumen, insbesondere Wohnräumen, mit Unterstützung durch Heizen und Kühlen, sondern auch ein Warmwasserbereiten erlaubt.

Gelöst wird diese Aufgabe erfindungsgemäß mit einer Vorrichtung, welche die Merkmale von Anspruch 1 aufweist.

Bevorzugte und vorteilhafte Ausgestaltungen der Erfindung sind Gegenstand der Unteransprüche.

Die erfindungsgemäße Vorrichtung dient insbesondere zum Belüften und Konditionieren - Beheizen oder Kühlen - von Räumen, und Erwärmen von Wasser.

Die erfindungsgemäße Vorrichtung ist in bevorzugten Ausführungsformen ein Lüftungsmodul, das ein mechanisches Belüften und Entlüften von Räumen, insbesondere von Wohnräumen und ähnlichen Räumen, in Kombination mit einem ersten Wärmetauscher, der als Gegenstromwärmetauscher ausgebildet ist, zum Rückgewinnen von Energie aus Abluft erlaubt. Zusätzlich erlaubt es die erfindungsgemäße Vorrichtung in einer ihrer Ausführungsformen Warmwasser in einem Speicher zu erwärmen.

In der erfindungsgemäßen Vorrichtung ist eine, insbesondere drehzahlgeregelte, Wärmepumpe vorgesehen, die einen im Zuluftstrom vorgesehenen dritten Wärmetauscher aufweist, mit dem wahlweise geheizt oder gekühlt werden kann.

Weiters ist bei der erfindungsgemäßen Vorrichtung eine Wärmepumpe zum Erwärmen von Warmwasser vorgesehen. Die erfindungsgemäße Vorrichtung umfasst zwei Wärmepumpen, also zwei voneinander getrennte Wärmepumpenkreise.

Die erfindungsgemäße Vorrichtung weist einen zweikreisigen Verdampfer auf. Die Wärmepumpenkreise beider Wärmepumpen führen durch den selben Wärmetauscher (zweiter Wärmetauscher), der in dem Strom der Fortluft angeordnet ist. So erlaubt es die erfindungsgemäße Vorrichtung, die Zuluft zu kühlen und gleichzeitig Brauchwasser zu erwärmen. Bei dieser Betriebsweise wirkt der in dem Fortluftstrom angeordnete zweite Wärmetauscher gleichzeitig als Kondensator für den Kältekreis "Wärmepumpenkreis Luft" (Wärme wird abgegeben) und als Verdampfer für den Kältekreis "Wärmepumpenkreis Wasser" (Wärme wird aufgenommen).

Die erfindungsgemäße Vorrichtung kann auch so betrieben werden, dass beide Wärmepumpen den im Fortluftstrom angeordneten zweiten Wärmetauscher als Verdampfer benützen, also Wärme aus der Fortluft entziehen, in welchem Fall es vorteilhaft ist, den Luftstrom durch den zweiten Wärmetauscher zu erhöhen, damit die Wärmepumpen wirksam betrieben werden können. Bei dieser Betriebsweise wird die im Bereich der Ströme Außenluft und Fortluft vorgesehene Bypassklappe geregelt geöffnet und der Fortluft ein Anteil an Außenluft beigemischt.

Im vorliegenden Zusammenhang wird mit dem Begriff "Außenluft" Luft verstanden, die mit der erfindungsgemäßen Vorrichtung von außerhalb des mit der erfindungsgemäßen Vorrichtung zu belüftenden Raumes zugeführt wird.

Im Vorliegenden wird unter dem Begriff "Fortluft" Luft verstanden, die von der erfindungsgemäßen Vorrichtung nach außen, also nach außerhalb des Raumes, der zu belüften ist, geleitet wird.

Der Begriff "Abluft" steht für aus dem zu belüftenden Raum abgezogene Luft, die der erfindungsgemäßen Vorrichtung zugeführt wird.

Unter dem Begriff "Zuluft" wird im Vorliegenden Luft verstanden, die von der erfindungsgemäßen Vorrichtung dem zu belüftenden Raum zugeführt wird.

Die erfindungsgemäße Vorrichtung vereint als "Wärmepumpenkombigerät" wichtige Funktionen und erlaubt eine kompakte Bauweise, so dass nur wenig Stellfläche benötigt wird.

Ein kontrolliertes Belüften von Räumen, insbesondere von Wohnräumen, versorgt die Räume permanent mit frischer und gefilterter Luft von außen und stellt einen hygienischen Luftaustausch sicher.

Durch das bei dem erfindungsgemäßen Gerät in Ausführungsformen verwirklichte, hocheffiziente Wärmerückgewinnungssystem wird ein hoher Wirkungsgrad erreicht, wobei die erfindungsgemäße Vorrichtung auch mit Abluftfeuchterückgewinnen ausgestattet werden kann.

Um in Sommermonaten einem Überwärmen der Wohnräume vorzubeugen, kann das Wärmerückgewinnen mit Hilfe einer Bypassklappe umgangen und so während der Nacht kühlere Außenluft eingebracht werden.

Zuluft wird bei Bedarf mittels einer bevorzugt leistungsgeregelten Wärmepumpe konditioniert, d.h. erwärmt oder gekühlt.

Bei gut gedämmten Räumen, insbesondere Wohnräumen, kann die Wärmepumpe die erforderliche gesamte Heiz- und Kühlleistung kostengünstig aufbringen.

Für eine effiziente Warmwassererzeugung ist in einer Ausführungsform der erfindungsgemäßen Vorrichtung noch eine Wärmepumpe integriert. Die Wärmepumpen können parallel betrieben werden und sorgen so für einen unterbrechungsfreien Betrieb auf der Luft- und auf der Wasserseite der erfindungsgemäßen Vorrichtung.

Weitere Einzelheiten und Merkmale der Erfindung ergeben sich aus der nachstehenden Beschreibung eines bevorzugten Ausführungsbeispiels unter Bezugnahme auf die Zeichnungen. Es zeigt:
- Fig. 1: eine erfindungsgemäße Vorrichtung bei abgenommener Frontklappe in Schrägansicht,
- Fig. 2: schematisch den Betriebszustand Lüftungsbetrieb mit Aktivkühlung und Warmwasserbereiten und
- Fig. 3: schematisch den Entlüftungsbetrieb mit Aktivheizung und Warmwasserbereiten.

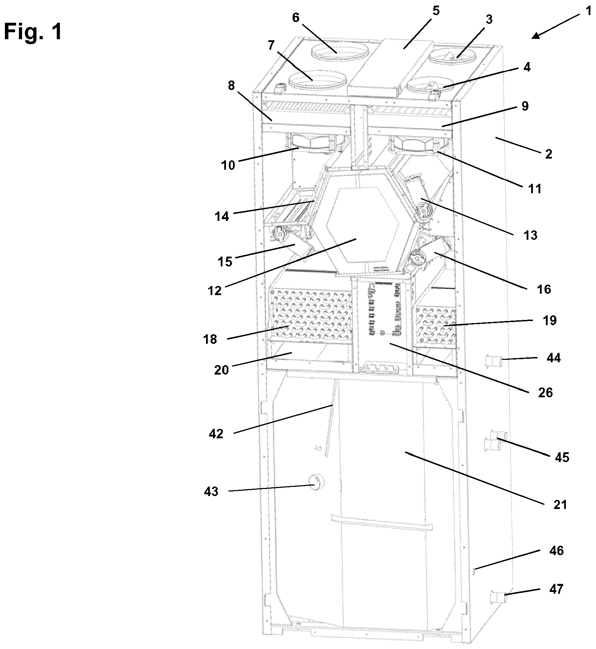

Wie in Fig. 1 schematisch gezeigt, umfasst die erfindungsgemäße Vorrichtung 1, die auch als Wärmepumpenkombigerät bezeichnet werden kann, ein kompakt ausgebildetes Gehäuse 2, in dem die Bauteile der Vorrichtung 1 untergebracht sind.

An der Oberseite des Gehäuses 2 ist eine Öffnung 3 für Zuluft und daneben eine Öffnung 4 für Abluft vorgesehen. An der Oberseite des Gehäuses 2 ist auch eine Elektroanschlussbox 5 mit Hauptplatine angeordnet. Neben der Elektroanschlussbox 5 ist eine Öffnung 6 für Fortluft und eine Öffnung 7 für Außenluft vorgesehen. Unterhalb der Öffnung 4 für Abluft ist ein Abluftfilter 9 vorgesehen. Unterhalb der Öffnung 7 für Außenluft ist ein Außenluftfilter 8 angeordnet.

Im Inneren des Gehäuses 2 sind die Strömungswege, also die Leitungen 30, 32, 31 und 33 für Außenluft, Fortluft, Abluft und Zuluft durch Zwischenwände voneinander getrennt, wobei in Zwischenwänden später noch zu erwähnende Klappen für das Steuern der Luftströme in der erfindungsgemäßen Vorrichtung 1 vorgesehen sind.

Unterhalb des Außenluftfilters 8 und des Abluftfilters 9 sind ein Außenluftventilator 10 und ein Abluftventilator 11 angeordnet.

In dem Gehäuse 2 der Vorrichtung 1 ist ein erster Wärmetauscher 12, der als Gegenstromwärmetauscher ausgebildet ist, angeordnet. Neben dem ersten Wärmetauscher 12 ist unterhalb der Öffnungen 3 und 4 für Zuluft und Abluft eine Bypassklappe 13, die in einer die Leitung 31 für Abluft mit der Leitung 32 für Fortluft verbindenden Leitung 34 (By-Pass) vorgesehen ist, mit ihrem Stellmotor angeordnet.

Unterhalb des Außenluftfilters 8 und des Außenluftventilators 10 ist ein vierter Wärmetauscher 14 als Vorheizregister für Außenluft eingebaut.

Neben dem unteren Bereich des ersten Wärmetauschers 12 ist eine Fortluftklappe 15 mit Stellmotor vorgesehen, die das Strömen von Außenluft in die Fortluft regelt.

Des Weiteren ist neben der unteren Hälfte des ersten Wärmetauschers 12 eine Zuluftklappe 16 mit Stellmotor vorgesehen, die den Strom der Zuluft regelt.

Unterhalb der Zuluftklappe 16 sind in einer Einhausung die Verdichter der Wärmepumpenkreise 40 und 41 eingebaut.

In dem Gehäuse 2 der Vorrichtung 1 sind weiters ein zweikreisiger, zweiter Wärmetauscher 18 im Fortluftstrom und ein dritter Wärmetauscher 19 im Zuluftstrom eingebaut.

Unterhalb der Wärmetauscher 18 und 19 ist eine Kondensatwanne 20 vorgesehen.

Der im Fortluftstrom angeordnete zweite Wärmetauscher 18 ist gleichzeitig der Verdampfer des in der erfindungsgemäßen Vorrichtung 1 vorgesehenen Wärmepumpenkreises 40 "Wasser" und des weiteren Wärmepumpenkreises 41 "Luft".

Der im Zuluftstrom vorgesehene dritte Wärmetauscher 19 ist gleichzeitig der Kondensator des in der erfindungsgemäßen Vorrichtung 1 vorgesehenen weiteren Wärmepumpenkreises 41 "Luft".

Im unteren Bereich des Gehäuses 2 der Vorrichtung 1 ist ein Warmwasserspeicher 21 angeordnet, dem eine Opferanode 42 und ein Elektroheizstab 43 und/oder eine Heizschlange 51 mit Solaranbindung zugeordnet ist.

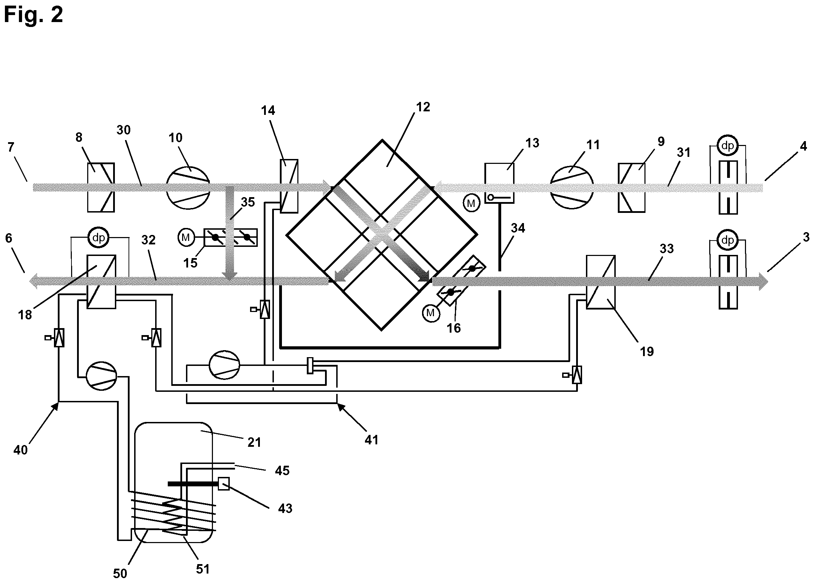

Fig. 2 zeigt, dass dem Warmwasserspeicher 21 eine Heizschlange 51, die eine Heizkreisanbindung oder eine Solaranbindung sein kann, zugeordnet ist.

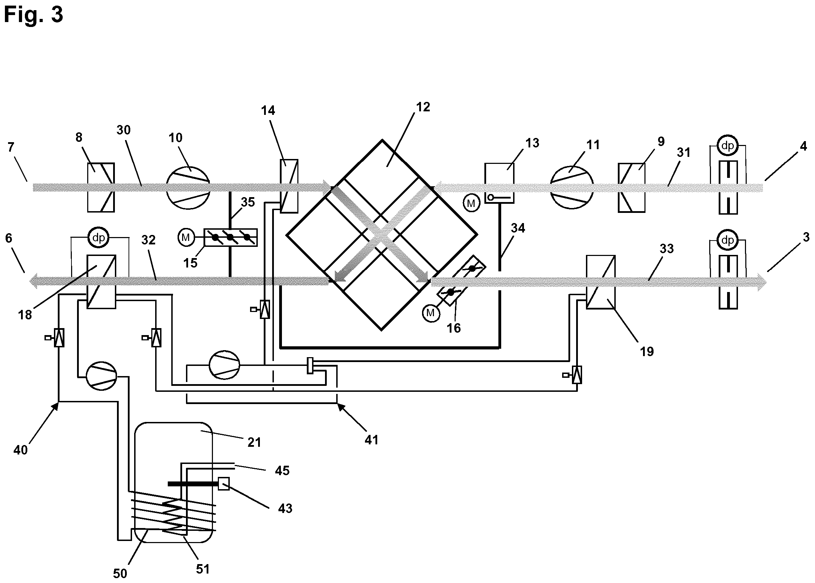

Das dem Warmwasserspeicher 21 zugeordnete (Aluminium-)Rohr 50 (Fig. 2 oder 3) ist gleichzeitig der Kondensator des in der erfindungsgemäßen Vorrichtung 1 vorgesehenen Wärmepumpenkreises 40 "Wasser".

Seitlich am Gehäuse 2 sind noch ein Warmwasseranschluss 44, ein Heizregisteranschluss 45 (Anbindung an den Wärmepumpenkreis 40 "Wasser"), ein Kaltwasseranschluss 47 und ein Kondenswasserabfluss 46 vorgesehen.

Zwischen den Wärmetauschern 18 und 19 ist eine Platine 26 für die Wärmepumpen angeordnet.

Nachstehend werden verschiedene Betriebsweisen der erfindungsgemäßen Vorrichtung unter Bezugnahme auf die Fig. 2 und 3 beschrieben.

Die Außenluft teilt sich in der erfindungsgemäßen Vorrichtung 1 in zwei Volumensströme auf, nämlich in einen Strom Zuluft und in einen Strom Fortluft.

Die Fortluft setzt sich aus zwei Volumsströmen zusammen, nämlich den Strom Abluft und den Strom Außenluft.

Bei der in Fig. 2 gezeigten Betriebsweise "Lüftungsbetrieb mit Aktivheizung und Warmwasser" wird Außenluft über die Öffnung 7, den Außenluftfilter 8, den Außenluftventilator 10 und das Vorheizregister 14 für die Außenluft (ausgebildet als vierter Wärmetauscher, der als Kondensator wirkt) dem ersten Wärmetauscher 12 zugeführt. In dem ersten Wärmetauscher 12 wird Außenluft durch ebenfalls durch den ersten Wärmetauscher 12 strömende Abluft erwärmt und strömt über die Zuluft regelnde Zuluftklappe 16 und den dritten Wärmetauscher 19 durch die Öffnung 3 für Zuluft in den zu belüftenden Raum ein.

Gleichzeitig strömt Abluft durch die Öffnung 4 in die Vorrichtung 1 und vom Abluftventilator 11 gefördert durch das Abluftfilter 9. Entsprechend der Stellung der Bypassklappe 13 strömt Abluft durch den ersten Wärmetauscher 12, tritt nach diesem durch den zweiten Wärmetauscher 18 und strömt durch die Öffnungen 6 für Fortluft aus der Vorrichtung 1 ab.

Während dieser Betriebsweise wird der abströmenden Fortluft durch die gewählte Stellung der Fortluftklappe 15, die in einer die Leitung 30 für Außenluft mit der Leitung 32 für Fortluft verbindenden Leitung 35 vorgesehen ist und die das Verhältnis Außenluft/Fortluft regelt, Außenluft im gewünschten Ausmaß zugemischt.

Es ist ersichtlich, dass bei der in Fig. 2 gezeigten Betriebsweise in den Raum strömende Außenluft im ersten Wärmetauscher 12 erwärmt wird, so dass Belüftungsbetrieb mit Aktivheizung und Warmwasserbereiten erreicht ist.

Bei der Betriebsweise gemäß Fig. 2 ist die Bypassklappe 13 geschlossen, so dass Abluft ausschließlich durch den ersten Wärmetauscher 12 als Fortluft durch die Öffnungen 6 für Fortluft abströmt. In gleicher Weise werden bei der in Fig. 2 gezeigten Betriebsweise der Außenluftventilator 10 und ebenso der Abluftventilator 11 geregelt. Auch die das Strömen von Zuluft regelnde Zuluftklappe 16 wird, den jeweiligen Betriebsstellungen angepasst, durch ihren Stellmotor betätigt, also je nach Bedarf weiter geöffnet oder geschlossen.

Bei der Betriebsweise gemäß Fig. 2 wirkt der zweite Wärmetauscher 18 als Verdampfer der Wärmepumpe, also als Kühlregister, das der Fortluft Wärme entzieht, die dem Warmwasserspeicher 21 über den Wärmepumpenkreis 40 "Wasser" zugeführt wird.

Der vierte Wärmetauscher 14 wirkt als Kondensator der Wärmepumpe und dient als Vorheizregister für die zugeführte Außenluft, falls diese eine Temperatur unterhalb des Gefrierpunktes aufweist.

Der dritte Wärmetauscher 19 wirkt als Kondensator der Wärmepumpe, also als Heizregister, das Zuluft erwärmt. Der dritte Wärmetauscher 19 ist über den weiteren Wärmepumpenkreis 41 "Luft" mit dem zweiten Wärmetauscher 18 verbunden.

Bei der in Fig. 3 gezeigten Betriebsweise "Lüftungsbetrieb mit Aktivkühlung und Warmwasser" wird die durch die Öffnung 7 für Außenluft einströmende Außenluft im ersten Wärmetauscher 12 durch abströmende Abluft gekühlt und strömt als gekühlte Zuluft in den zu belüftenden Raum. Bei dieser Betriebsweise ist die Fortluftklappe 15 geschlossen und das Vorheizregister in Form des vierten Wärmetauschers 14 für die Außenluft inaktiv. Die Bypassklappe 13 ist durch ihren Stellmotor so verstellt, dass Abluft ausschließlich durch den ersten Wärmetauscher 12 strömt. Die in dem Zuluftstrom nach dem ersten Wärmetauscher 12 angeordnete Zuluftklappe 16 ist durch ihren Stellmotor in die geöffnete Stellung verstellt, wogegen die Fortluftklappe 15 durch ihren Stellmotor in die geschlossene Stellung verstellt ist.

Im Übrigen wirkt bei der in Fig. 3 gezeigten Betriebsweise der zweite Wärmetauscher 18 in dem Strom Fortluft als Kondensator des weiteren Wärmepumpenkreises 41 "Luft", wobei die dabei gewonnene Wärme im Wärmepumpenkreis 40 "Wasser" für das Erwärmen von Wasser im Warmwasserspeicher 21 herangezogen werden kann.

Der dritte Wärmetauscher 19 wirkt als Verdampfer der Wärmepumpe und kühlt durch ihn strömende Zuluft.

Der dritte Wärmetauscher 19 ist über den weiteren Wärmepumpenkreis 41 "Luft" mit dem zweiten Wärmetauscher 18 verbunden.

In der vorstehend beschriebenen, bevorzugten Ausführungsform umfasst die erfindungsgemäße Vorrichtung zwei getrennte Kältekreise, nämlich den Wärmepumpenkreis 40 "Wasser" und den weiteren Wärmepumpenkreis 41 "Luft", d.h. zwei Wärmepumpen. Lediglich der Verdampfer (zweite Wärmetauscher) 18 bildet eine Schnittstelle, wie dies bereits beschrieben worden ist.

Der weitere Wärmepumpenkreis 41 "Luft" umfasst einen Rollkolbenverdichter, der drehzahlgeregelt (leistungsgeregelt) betrieben wird. Realisiert wird das bevorzugt über eine Ansteuerung des Rollkolbenverdichters mittels Frequenzumformer.

Der Wärmepumpenkreis 40 "Wasser" umfasst ebenfalls einen Rollkolbenverdichter. Dieser wird jedoch nicht leistungsgeregelt betrieben. Als Expansionsventile kommen jeweils elektronisch geregelte Ventile zum Einsatz.

Zusammenfassend kann ein Ausführungsbeispiel der erfindungsgemäßen Vorrichtung wie folgt beschrieben werden: Eine Vorrichtung zum Belüften und zum Konditionieren, nämlich Beheizen oder Kühlen, von Räumen und zum Erwärmen von Brauchwasser umfasst zwei getrennte Wärmepumpenkreise 40, 41, nämlich den Wärmepumpenkreis 40 für das Erwärmen von Wasser in einem Warmwasserspeicher 21 und den weiteren Wärmepumpenkreis 41 für das Konditionieren des zu belüftenden Raumes. Die Wärmepumpenkreise 40 und 41 haben einen gemeinsamen Wärmetauscher 18, der als Kondensator und als Verdampfer dient. Die Ströme von Zuluft, Abluft, Fortluft und Außenluft werden über einen als Gegenstromwärmetauscher ausgebildeten Wärmetauscher 12 geführt.

### Bezugszeichenliste

- 1: Vorrichtung
- 2: Gehäuse
- 3: Öffnung (Zuluft)
- 4: Öffnung (Abluft)
- 5: Elektroanschlussbox (mit Hauptplatine)
- 6: Öffnung (Fortluft)
- 7: Öffnung (Außenluft)
- 8: Außenluftfilter
- 9: Abluftfilter
- 10: Außenluftventilator
- 11: Abluftventilator
- 12: erster Wärmetauscher (Gegenstrom)
- 13: Bypassklappe
- 14: vierter Wärmetauscher als Vorheizregister für Außenluft
- 15: Fortluftklappe (regelt Außenluft → Fortluft)
- 16: Zuluftklappe (regelt Zuluft)
- 17: Verdichter
- 18: zweiter Wärmetauscher
- 19: dritter Wärmetauscher
- 20: Kondensatwanne
- 21: Warmwasserspeicher
- 22: Warmwasseranschluss
- 23: Heizregisteranschluss
- 24: Kaltwasseranschluss
- 25: Abfluss Kondenswasser
- 26: Platine für Wärmepumpen
- 27 28 29 30: Leitung für Außenluft
- 31: Leitung für Abluft
- 32: Leitung für Fortluft
- 33: Leitung für Zuluft
- 34: Leitung (By-Pass)
- 35: Leitung
- 36 37 38 39 40: Wärmepumpenkreis (Wasser)
- 41: weiterer Wärmepumpenkreis (Luft)
- 42: Opferanode
- 43: Elektroheizstab
- 44: Warmwasseranschluss
- 45: Heizregisteranschluss
- 46: Kondenswasserabfluss
- 47: Kaltwasseranschluss
- 48 49 50: (Alu-)Rohr
- 51: Heizschlange

## Patentansprüche

1. Vorrichtung zum Belüften von Räumen, umfassend Wärmepumpen sowie Öffnungen (7, 6, 4 und 3) und Leitungen (30, 32, 31 und 33) für die Ströme von Außenluft, Fortluft, Abluft und Zuluft, wobei die Vorrichtung einen Wärmepumpenkreis (40) für das Erwärmen von Wasser und einen weiteren Wärmepumpenkreis (41) für das Erwärmen oder Kühlen von Zuluft aufweist, wobei die Ströme von Außenluft, Fortluft, Abluft und Zuluft über einen Wärmetauscher (12) geführt sind, und wobei die Ströme von Außenluft und Zuluft einerseits und die Ströme Abluft und Fortluft andererseits durch getrennte Strömungswege in dem als Gegenstromwärmetauscher ausgebildeten ersten Wärmetauscher (12) geführt sind, **dadurch gekennzeichnet, dass** den zwei Wärmepumpenkreisen (40, 41) ein gemeinsamer, wahlweise als Kondensator oder als Verdampfer der Wärmepumpenkreise (40, 41) wirkender, zweikreisiger zweiter Wärmetauscher (18) zugeordnet ist, wobei der zweite Wärmetauscher (18) dem Strom von Fortluft zugeordnet ist, wobei ein dritter Wärmetauscher (19) des weiteren Wärmepumpenkreises (41) dem Strom von Zuluft zugeordnet ist, und wobei ein vierter Wärmetauscher (14) dieses weiteren Wärmepumpenkreises (41) dem Strom von Außenluft zugeordnet ist.

2. Vorrichtung nach Anspruch 1, **dadurch gekennzeichnet, dass** in der Vorrichtung Klappen zum Regeln der Ströme von Abluft, Außenluft, Fortluft und Zuluft vorgesehen sind.

3. Vorrichtung nach Anspruch 1 oder 2, **dadurch gekennzeichnet, dass** den Klappen Stellmotore zugeordnet sind.

4. Vorrichtung nach einem der Ansprüche 1 bis 3, **dadurch gekennzeichnet, dass** die Leitungen (31) für den Strom von Abluft über eine mit einer Bypassklappe (13) geregelte Bypass-Leitung (34) mit der Leitung (32) für den Strom von Fortluft verbunden ist.

5. Vorrichtung nach einem der Ansprüche 1 bis 4, **dadurch gekennzeichnet, dass** die Leitung (30) für den Strom von Außenluft mit der Leitung (32) für den Strom für Fortluft über eine Leitung (35), in der eine Fortluftklappe (15) vorgesehen ist, verbunden ist.

6. Vorrichtung nach einem der Ansprüche 1 bis 5, **dadurch gekennzeichnet, dass** der Wärmepumpenkreis (40), der für das Erwärmen von Wasser ausgebildet ist, den zweiten Wärmetauscher (18) aufweist und wirksam mit einem Warmwasserspeicher (21) verbindbar ist.

## Claims

1. Device for ventilating rooms, comprising heat pumps as well as openings (7, 6, 4 and 3) and ducts (30, 32, 31 and 33) for the flows of outside air, outgoing air, exhaust air and supply air, wherein the device has a heat pump circuit (40) for heating water and a further heat pump circuit (41) for heating or cooling supply air, wherein the flows of outside air, outgoing air, exhaust air and supply air are guided via a first heat exchanger (12), and wherein the flows of outside air and supply air on the one hand and the flows of outgoing air and exhaust air on the other hand are guided through separate flow paths in the first heat exchanger (12) designed as a countercurrent heat exchanger, wherein the two heat pump circuits (40, 41) are associated with a common, two-circuit second heat exchanger (18) acting optionally as a condenser or as an evaporator of the heat pump circuits (40, 41), wherein the second heat exchanger (18) is associated with the flow of outgoing air, wherein a third heat exchanger (19) of the further heat pump circuit (41) is associated with the flow of supply air, wherein a fourth heat exchanger (14) of this further heat pump circuit (41) is associated with the flow of outside air.

2. Device according to claim 1, **characterized in that** flaps are provided in the device for controlling the flows of exhaust air, outside air, outgoing air and supply air.

3. Device according to claim 1 or 2, **characterized in that** the flaps are associated with servomotors.

4. Device according to one of claims 1 to 3, **characterized in that** the ducts (31) for the flow of exhaust air are connected to the duct (32) for the flow of outgoing air via a bypass line (34) controlled by a bypass flap (13).

5. Device according to one of claims 1 to 4, **characterized in that** the duct (30) for the flow of outside air is connected to the duct (32) for the flow of outgoing air via a duct (35) in which an outgoing air flap (15) is provided.

6. Device according to one of claims 1 to 5, **characterized in that** the heat pump circuit (40), which is designed for heating water, has the second heat exchanger (18) and can be connected effectively to a hot water tank (21).

## Revendications

1. Dispositif pour la ventilation de locaux, comprenant des pompes à chaleur ainsi que des ouvertures (7, 6, 4 et 3) et des conduits (30, 32, 31 et 33) pour les flux d'air extérieur, d'air rejeté, d'air repris et d'air fourni, le dispositif comportant un circuit de pompe à chaleur (40) pour le chauffage de l'eau et un autre circuit de pompe à chaleur (41) pour le chauffage ou le refroidissement de l'air fourni, dans lequel les flux d'air extérieur, d'air rejeté, d'air repris et d'air fourni sont guidés par un premier échangeur de chaleur (12) et dans lequel les flux d'air extérieur et d'air fourni d'une part et les flux d'air repris et d'air rejeté d'autre part sont guidés par des chemins d'écoulement séparés dans le premier échangeur de chaleur (12) réalisé sous la forme d'un échangeur de chaleur à contre-courant, dans lequel aux deux circuits de pompe à chaleur (40, 41) est associé un deuxième échangeur de chaleur (18) commun, à deux circuits, agissant au choix comme condenseur ou comme évaporateur des circuits de pompe à chaleur (40, 41), le deuxième échangeur de chaleur (18) est associé au flux d'air rejeté, un troisième échangeur de chaleur (19) de l'autre circuit de pompe à chaleur (41) est associé au flux d'air fourni et un quatrième échangeur de chaleur (14) de cet autre circuit de pompe à chaleur (41) est associé au flux d'air extérieur.

2. Dispositif selon la revendication 1, **caractérisé en ce que** dans le dispositif, des clapets sont prévus pour la régulation des flux d'air repris, d'air extérieur, d'air rejeté et d'air fourni.

3. Dispositif selon la revendication 1 ou 2, **caractérisé en ce que** des servomoteurs sont associés aux clapets.

4. Dispositif selon l'une des revendications 1 à 3, **caractérisé en ce que** le conduit (31) pour le flux d'air repris est relié au conduit (32) pour le flux d'air rejeté par un conduit de dérivation (34) commandé par un clapet de dérivation (13).

5. Dispositif selon l'une des revendications 1 à 4, **caractérisé en ce que** le conduit (30) pour le flux d'air extérieur est relié au conduit (32) pour le flux d'air rejeté par un conduit (35) dans lequel un clapet d'air rejeté (15) est prévu.

6. Dispositif selon l'une des revendications 1 à 5, **caractérisé en ce que** le circuit de pompe à chaleur (40), qui est conçu pour le chauffage de l'eau, comporte le deuxième échangeur de chaleur (18) et peut être raccordé fonctionnellement à un réservoir d'eau chaude (21).
